# FASCICULE DE BREVET EUROPEEN

(11) **EP 3 117 083 B1**
(45) Date de publication et mention de la délivrance du brevet: **08.07.2020**
(21) Numéro de dépôt: 15704744.0
(22) Date de dépôt: 05.02.2015
(51) Int. Cl.: F02B 23/06

(54) **PROCÉDÉ DE CONTRÔLE DE L'INJECTION DE COMBUSTIBLE D'UN MOTEUR À COMBUSTION INTERNE À INJECTION DIRECTE, NOTAMMENT À ALLUMAGE PAR COMPRESSION, ET MOTEUR UTILISANT UN TEL PROCÉDÉ**
KRAFTSTOFFEINSPRITZSTEUERVERFAHREN FÜR EINEN VERBRENNUNGSMOTOR MIT DIREKTEINSPRITZUNG MIT SELBSTZÜNDUNG SOWIE VERWENDUNG EINES SOLCHEN VERFAHRENS
FUEL INJECTION CONTROL METHOD FOR INTERNAL COMBUSTION ENGINE WITH DIRECT INJECTION, INCLUDING COMPRESSION IGNITION AND ENGINE USING SUCH A METHOD

(30) Priorité: 14.03.2014 FR 1452119
(43) Date de publication de la demande: 18.01.2017
(73) Titulaire: IFP Energies nouvelles, 92500 Rueil-Malmaison (FR)
(72) Inventeur: MARTINEZ, Lionel, F-78550 Maulette (FR); RICHARD, Stéphane, F-78550 Bazainville (FR); LAGET, Olivier, F-92500 Rueil-Malmaison (FR)
(74) Mandataire: IFP Energies nouvelles
(86) Numéro de dépôt international: PCT/EP2015/052442
(87) Numéro de publication internationale: WO 2015/135700

(56) Documents cités:
- EP-A1- 2 615 296
- WO-A2-2013/016713
- FR-A1- 2 887 586
- John B. Heywood: "INTERNAL COMBUSTION ENGINE FUNDAMENTALS", 1 avril 1988 (1988-04-01), McGraw-Hill, Singapore, XP002730572, ISBN: 0-07-100499-8 page 342 - page 345
- HONGMING XU: "Some Critical Technical Issues on the Steady Flow Testing of Cylinder Heads", SAE TECHNICAL PAPER SERIES, no. 2001-01-1308, 6 March 2001 (2001-03-06), - 8 March 2001 (2001-03-08), Detroit ISSN: 0148-7191

## Description

La présente invention se rapporte à un procédé de contrôle de l'injection de combustible d'un moteur à combustion interne à injection directe, notamment d'un moteur à allumage par compression, et à un moteur utilisant un tel procédé.

Elle concerne plus particulièrement un procédé pour un moteur utilisé dans le domaine aéronautique ou routier ou dans le domaine des installations stationnaires, comme un groupe électrogène.

Ce type de moteur comprend généralement au moins un cylindre, un piston comprenant un téton disposé dans un bol concave et coulissant dans ce cylindre en un mouvement rectiligne alternatif, des moyens d'admission d'un comburant, des moyens d'échappement de gaz brûlés, une chambre de combustion, et des moyens d'injection pour injecter un combustible dans la chambre de combustion.

Comme cela est généralement admis, lors de la conception d'un moteur, les contraintes de performances, d'émissions de polluants et de tenue mécanique de la chambre de combustion sont de plus en plus fortes alors que les moyens de les satisfaire sont opposés.

Ainsi l'augmentation des performances entrainent généralement une augmentation des émissions de polluants et des contraintes mécaniques plus fortes.

Il est nécessaire de pallier ces contraintes de manière à garantir une émission de polluants limitée et une tenue mécanique satisfaisante sur toute la plage de fonctionnement du moteur et en particulier à très forte charge. En particulier pour les émissions polluantes l'utilisation de la totalité du comburant présent dans la chambre de combustion, par exemple un comburant comprenant de l'air à pression ambiante, de l'air suralimenté, ou un mélange d'air (suralimenté ou non) et de gaz brûlés recirculés, est d'une grande importance.

En effet, il est nécessaire que le mélange carburé (comburant/combustible) dans la chambre de combustion soit le plus homogène possible.

En pratique, le combustible reste confiné dans le bol et ne peut pas se mélanger au comburant situé notamment dans la chasse, c'est-à-dire dans le volume localisé dans la partie haute de la chambre de combustion délimitée par la paroi du cylindre et la face de la culasse en regard du piston.

Ceci a pour inconvénients de créer des zones à fortes richesse dans la chambre de combustion engendrant une forte production de suies, d'oxyde de carbone (CO) et d'hydrocarbures imbrûlés (HC) lors de la combustion de ce mélange carburé.

De plus, pour revenir sur la problématique de tenue mécanique, la charge thermique est concentrée sur le réentrant du piston, c'est-à-dire le col ou la restriction de diamètre de bol qui marque la transition entre le bol du piston et la zone supérieure englobant la chasse, ce qui peut être limitant en termes de tenue mécanique à très fortes charges.

Pour pallier ces inconvénients, et comme cela est mieux décrit dans la demande de brevet français N° 13 60426 du demandeur, il est prévu d'utiliser un moteur à combustion interne comprenant des moyens d'injection de combustible avec des jets selon au moins deux angles de nappe et un piston comportant un bol muni d'un téton avec deux volumes de zones de combustion et une aérodynamique interne améliorant sensiblement la qualité de la combustion. Un exemple de moteur avec des caractéristiques similaires est connu de EP 2615296.

Ceci permet d'utiliser une plus grande quantité de comburant comparé aux moteurs traditionnels et de répartir la charge thermique sur une plus grande surface de la chambre de combustion.

Dans ce type de moteurs, le mélange entre le combustible injecté et le comburant, tel que de l'air à pression ambiante ou de l'air suralimenté ou encore un mélange d'air (suralimenté ou non) avec des de gaz d'échappement recirculés, admis dans la chambre de combustion se fait en deux temps.

Tout d'abord lors de l'injection du combustible, le comburant, situé à la périphérie du jet de combustible, est entraîné par ce même jet. Un mélange à petite échelle issue de la turbulence générée par cet entraînement se produit alors.

Afin d'améliorer ce mélange combustible/comburant, on utilise dans un second temps un mouvement tourbillonnaire du comburant, appelé swirl, qui vient "brasser" à grande échelle le combustible non mélangé. Ce swirl peut être vu comme un mouvement de rotation du comburant autour d'un axe sensiblement parallèle ou confondu avec celui de la chambre de combustion. Ce swirl peut être obtenu par une admission particulière du comburant, tel que par une géométrie spécifique des conduits d'admission.

Dans cette configuration, il faut cependant noter qu'alors que le mélange à petite échelle réalisé dans le spray gazeux est très rapide, le mélange à grande échelle associé au mouvement de swirl se fait plus lentement.

Les performances du moteur, sa consommation de combustible ou encore les émissions de polluants comme les suies, le monoxyde de carbone ou les hydrocarbures imbrûlés, sont très dépendantes de la capacité à mélanger rapidement le combustible avec le comburant admis.

Un travail d'optimisation du système d'injection et du niveau de swirl est donc généralement réalisé afin d'optimiser les prestations du moteur.

Une des solutions consiste à utiliser un nombre de swirl, dénommé Ns, relativement élevé, de l'ordre de 2 à 3, ce nombre étant égal au rapport entre la vitesse de rotation du mouvement tourbillonnaire du comburant et celle du vilebrequin.

Un inconvénient de cette solution est que, sur certains points de fonctionnement du moteur et plus particulièrement lorsque la pression d'injection de combustible n'est pas assez élevée, ou encore lorsqu'une grande quantité de combustible est injectée, les jets de combustible peuvent être déviés circonférentiellement d'une manière excessive, résultant en une interaction, voire une superposition entre les différents jets.

Ce phénomène peut faire augmenter significativement les émissions de suies et d'hydrocarbures imbrulés, tout en dégradant le rendement de combustion et donc la puissance et la consommation.

La présente invention se propose de remédier aux inconvénients mentionnés ci-dessus grâce à un procédé qui permet d'obtenir un meilleur mélange entre le comburant (fluide gazeux) tout en autorisant l'utilisation d'un système d'injection de combustible à au moins deux angles de nappe et un piston dont le profil permet à la chambre de combustion de comporter au moins deux zones de combustion.

A cet effet, l'invention concerne un procédé d'injection de combustible pour un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave avec au moins deux zones de mélange, lesdits moyens d'injection projetant du combustible selon au moins deux nappes de jets de combustible d'angles de nappe différents, une nappe inférieure d'axe de jet C1 pour la zone Z1 et une nappe supérieure d'axe de jet C2 pour la zone Z2, caractérisé en ce qu'il consiste à injecter dans la chambre de combustion les jets de combustible de l'une des nappes dans une direction radiale formant un angle b2 non nul avec la direction radiale C2 des jets de combustible de l'autre des nappes, ledit angle étant sensiblement égal au demi-angle entre deux jets d'une même nappe, et à admettre le comburant dans un mouvement de swirl avec un nombre de swirl inférieur ou égal à 1,5.

Le procédé peut consister à injecter le combustible selon un nombre de jets "n" relié au nombre de swirl "Ns" par la corrélation : -4.Ns+16≤ n ≤ -4.Ns+18.

Le procédé peut consister à injecter le combustible selon au moins deux nappes de jets de combustible situées axialement l'une au-dessus de l'autre avec un angle de nappe différent l'un de l'autre.

Le procédé peut consister à injecter le combustible avec un débit de combustible diffèrent entre les deux nappes.

L'invention concerne également un moteur à combustion interne à injection directe à allumage par compression comprenant au moins un cylindre, une culasse portant des moyens d'injection de combustible, un piston coulissant dans ce cylindre, une chambre de combustion délimitée sur un côté par la face supérieure du piston comportant un téton s'érigeant en direction de la culasse et disposé au centre d'un bol concave, ledit procédé consistant à injecter le combustible selon au moins deux nappes de jets de combustible d'angle de nappe différents, une nappe inférieure d'axe de jet C1 et une nappe supérieure d'axe de jet C2, caractérisé en ce qu'il comprend des moyens d'injection de combustible pour injecter les jets de combustible de l'une des nappes dans une direction radiale formant un angle non nul avec la direction radiale des jets de combustible de l'autre des nappes et en ce qu'il comprend des moyens d'admission du comburant dans un mouvement de swirl avec un nombre de swirl inférieur ou égal à 1,5.

Les autres caractéristiques et avantages de l'invention vont apparaître maintenant à la lecture de la description qui va suivre, donnée à titre uniquement illustratif et non limitatif, et à laquelle sont annexées :
- la figure 1 qui montre un moteur à combustion interne selon l'invention ;
- la figure 2 qui est une vue partielle à grande échelle d'une demi-section du profil du bol de piston du moteur de la figure 1 ;
- la figure 3 qui est une vue en coupe locale transversale du bol pendant la phase initiale d'injection de combustible ;
- les figures 3A et 3B qui sont des vues en coupe selon les lignes AA et BB de la figure 3;
- la figure 4 qui est une autre vue en coupe locale transversale du bol pendant la phase terminale d'injection de combustible et
- les figures 4A et 4B qui sont des vues en coupe selon les lignes AA et BB de la figure 4.

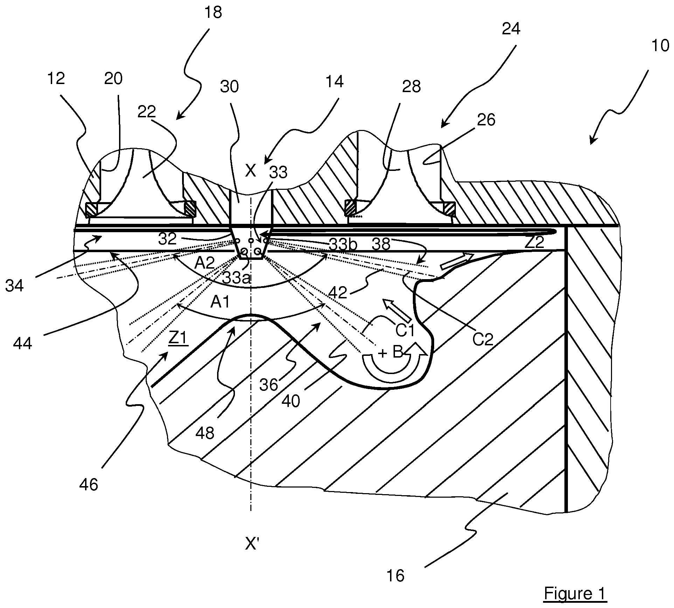

En se référant à la figure 1, un moteur à combustion interne à injection directe à allumage par compression comprend au moins un cylindre 10, une culasse 12 fermant le cylindre en partie haute, des moyens d'injection de combustible 14 portés par la culasse et un piston 16 d'axe XX' coulissant dans le cylindre en un mouvement rectiligne alternatif.

Par combustible, il est entendu un carburant liquide, comme du gazole, du kérosène ou tout autre combustible ayant les caractéristiques physico-chimiques permettant le fonctionnement d'un moteur de type allumage par compression incluant un système d'injection directe de ce combustible.

Ce moteur comprend également un moyen d'échappement 18 des gaz brûlés avec au moins une tubulure d'échappement 20 dont l'ouverture peut être contrôlée par tous moyens, comme par exemple une soupape d'échappement 22 et un moyen d'admission 24 d'un comburant avec au moins une tubulure d'admission 26 dont l'ouverture peut être contrôlée par tous moyens, comme par exemple une soupape d'admission 28.

Les moyens d'admission sont conformés pour admettre le comburant avec un taux de swirl déterminé. Pour cela, les moyens d'admission peuvent comporter au moins un moyen de vannage et le moteur peut comprendre au moins un moyen de commande pour actionner le moyen de vannage de manière à obtenir le taux de swirl déterminé. Ces moyens d'admission peuvent également comprendre une géométrie spécifique de la tubulure d'admission 26.

Les moyens d'injection comprennent au moins un injecteur de combustible 30, de préférence disposé dans l'axe XX' du piston dont le nez 32 comporte une multiplicité d'orifices 33 au travers desquels le combustible est pulvérisé et projeté en direction de la chambre de combustion 34 du moteur.

C'est à partir de ces moyens d'injection que le combustible projeté forme au moins deux nappes de jets de combustible, ici deux nappes 36 et 38 de jets de combustibles 40 et 42, qui, dans l'exemple montré, ont un axe général confondu avec celui du piston 16 tout en étant situées axialement l'une au-dessus de l'autre.

Plus précisément, la nappe 36, qui est située le plus près du piston 16, est dénommée dans la suite de la description nappe inférieure alors que la nappe 38 placée le plus loin de ce piston est appelée nappe supérieure.

Comme visible sur la figure 1, ces deux nappes forment des angles de nappe A1 et A2 différents l'un de l'autre. Par angle de nappe, il est entendu l'angle au sommet que forme le cône issu de l'injecteur et dont la paroi périphérique fictive passe par tous les axes C1 ou C2 des jets de combustible 40 ou 42.

Avantageusement, l'angle de nappe A1 de la nappe basse est au plus égal à 130°, de préférence compris entre 105° et 130°, alors que l'angle de nappe A2 de la nappe haute est au plus égale à 180°, de préférence compris entre 155° et 180°.

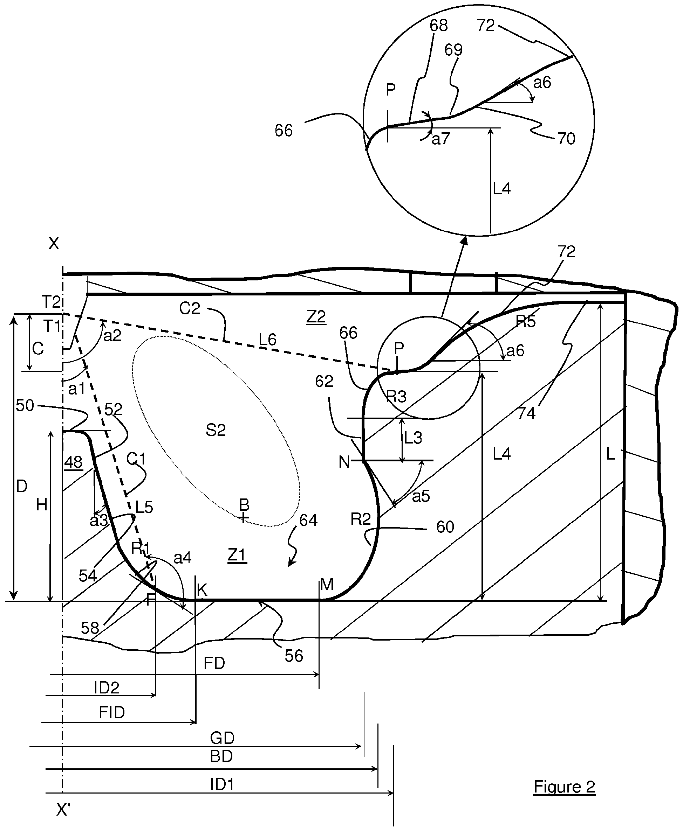

Pour des raisons de simplification dans la suite de la description l'angle a1 correspond à A1/2 alors que l'angle a2 correspond à A2/2 (Voir figure 2).

De manière préférentielle la différence entre l'angle A1 et l'angle A2 est supérieure ou égal à 25°. Ceci permet ainsi de limiter les recouvrements de jets de combustible entres les deux nappes et donc la formation de polluants, tels que les suies.

Bien entendu, il peut être prévu que les moyens d'injection ne soient pas disposés dans l'axe XX', mais dans ce cas, l'axe général des nappes de jets de combustible issues de l'injecteur de combustible est pour le moins sensiblement parallèle à cet axe XX'.

De même, il peut être prévu que chaque nappe soit portée par un injecteur distinct (injecteur simple nappe) avec un ciblage dédié dans des zones distinctes de la chambre de combustion.

La chambre de combustion 34 est délimitée par la face interne de la culasse 12 en vis à vis du piston, la paroi interne circulaire du cylindre 10 et la face supérieure 44 du piston 16.

Cette face supérieure du piston comporte un bol concave 46, ici d'axe confondu avec celui du cylindre, dont la concavité est tournée vers la culasse et qui loge un téton 48 situé sensiblement au centre du bol, qui s'élève vers la culasse 12, en étant de préférence coaxial avec l'axe des nappes de combustible issues de l'injecteur 30.

Bien entendu, il peut être prévu que l'axe du bol ne soit pas coaxial avec celui du cylindre mais l'essentiel réside dans la disposition selon laquelle l'axe de la nappe de jets de combustible, l'axe du téton et l'axe du bol soient de préférence confondus.

En se rapportant en plus à la figure 2, le téton 48, de forme générale tronconique, comporte un sommet 50 de préférence arrondi, se poursuivant, en s'écartant symétriquement de l'axe XX' vers l'extérieur du piston 16, par une surface inclinée 52 sensiblement rectiligne se poursuivant par un flanc inclinée 54 pour arriver à un fond 56 du bol.

Bien entendu et cela sans sortir du cadre de l'invention, la surface inclinée 52 peut être inexistante (longueur nulle) et le flanc incliné 54 raccorde alors le sommet du téton au fond du bol.

Dans l'exemple de la figure 2, le fond de ce bol est arrondi avec une surface arrondie concave 58 en arc de cercle de rayon R1, dite surface arrondie interne, raccordée au bas du flanc incliné 54 et une autre surface arrondie concave 60 en arc de cercle de rayon R2, dite surface arrondie externe, raccordée par une de ses extrémités à l'extrémité basse de la surface arrondie interne à un point M et par l'autre de ses extrémités à une paroi latérale 62, ici sensiblement verticale, à un point N.

Les deux surfaces arrondies 58 et 60 délimitent ainsi la partie basse d'un volume torique, ici un tore de section sensiblement cylindrique 64 et de centre B dont le rôle sera explicité dans la suite de la description.

La paroi latérale 62 se poursuit, toujours en s'écartant de l'axe XX', par une surface arrondie convexe 66 en arc de cercle de rayon R3, dite réentrant, aboutissant à un plan inclinée 68 relié à une surface d'inflexion concave 69 raccordée à une surface sensiblement plane 70. Cette surface plane se continue par une surface convexe externe 72 en arc de cercle de rayon R5 qui arrive à une surface plane 74 s'avançant jusqu'au voisinage de la paroi du cylindre.

La chambre de combustion comprend ainsi deux zones distinctes Z1 et Z2 dans lesquelles s'effectue le mélange entre le comburant qu'elles contiennent (air - suralimenté ou non - ou mélange d'air et de gaz brûlés recirculés) et le combustible provenant de l'injecteur ainsi que la combustion du mélange carburé ainsi formé.

La zone Z1, délimitée par le téton 48, le tore 64 du fond du bol, la paroi 62 et la surface arrondie convexe 66, forme la zone basse de la chambre de combustion qui est associée à la nappe inférieure 36 de jets de combustible d'axe C1. La zone Z2, démarquée par le plan incliné 68, la surface concave 69, la surface sensiblement plane 70, la surface convexe 72, la surface plane 74, la paroi interne périphérique du cylindre et la culasse 12, constitue la zone haute de cette chambre qui est associée à la nappe supérieure 38 de jets de combustible d'axe C2.

Dans cette configuration, le bol comprend, pour une position du piston proche du point mort haut :
- un diamètre externe de fond de bol FD avec un rayon considéré entre l'axe XX' et le point M le plus bas du bol, c'est à dire à l'intersection entre les surfaces de rayons R1 et R2,
- un diamètre de l'ouverture de bol BD avec un rayon considéré au voisinage du fond du bol et correspondant à une distance prise entre l'axe XX' et le point le plus éloigné de la surface concave externe 60,
- un diamètre de col GD avec un rayon qui correspond à la distance entre l'axe XX' et la paroi verticale 62 qui délimite la section de sortie de ce bol,
- un diamètre d'injection haut ID1 avec un rayon qui correspond à la distance entre l'axe XX' et le début de la surface d'inflexion 69 au point P entre le plan incliné 68 et la surface convexe 66 en délimitant une longueur L6 des jets 38 entre l'origine T2 de l'axe C2 des jets sur l'axe du nez de l'injecteur et le point P et qui répond à la formule ID1/sin(a2),
- une longueur développée de la demi-coupe diamétrale Cb du bol, constituée par la longueur depuis l'intersection du sommet du téton avec l'axe XX' jusqu'à la paroi du cylindre,
- une hauteur H de téton entre le fond du bol au point M jusqu'au sommet du téton,
- une hauteur L du bol entre le fond du bol au point M jusqu'à la surface plane 74,
- une hauteur de jonction L3, qui correspond à l'étendu de la paroi latérale 62, considérée entre la fin de la surface arrondie externe 60 au point N et le début de la surface arrondie externe 66,
- une hauteur L4 considérée entre le point P et le point M,
- un angle d'inclinaison a3 par rapport à une verticale pour le flanc incliné 54,
- un angle d'inclinaison a4 formé par l'axe principal C1 des jets de combustible de la nappe inférieure 36 impactant le tore avec la tangente au point d'impact F en délimitant une longueur L5 des jets 40 entre l'origine T1 de l'axe C1 des jets sur l'axe du nez de l'injecteur et le point F. Cette longueur L5 répond à la formule ID2/sin(a1) avec ID2 qui correspond à un diamètre d'injection bas avec un rayon qui correspond à la distance entre l'axe XX' et le point F,
- un angle d'inclinaison a5 considéré à la tangence de la surface arrondie externe 60 avec la paroi latérale 62 au point N,
- un angle d'inclinaison a6 par rapport à l'horizontal et la tangente à la paroi sensiblement plane 70,
- un angle d'inclinaison a7 par rapport à l'horizontale et le plan incliné 68 au point d'intersection P.

Tous ces paramètres sont appréciés pour une position du piston 16 au voisinage du point mort haut qui correspond à une distance D considérée entre le point M et l'origine T2 de l'axe C2 des jets 42.

Plus précisément, cette distance D est égale à la somme de la hauteur L4 et de la hauteur C, hauteur C qui correspond à la hauteur axiale entre l'origine T2 et le point P. Cette hauteur correspond à la formule ID1/tan(a2).

Ainsi, les paramètres dimensionnels et angulaires de ce bol satisfont à au moins l'une des conditions suivantes :
- l'angle a4 est supérieur à 80°. Ceci revient à faire passer plus de la moitié du jet de combustible entre le centre B du tore 64 et le téton et plus précisément la partie basse au niveau du point M et donc d'assurer un mouvement aérodynamique dans le tore remontant vers le haut du cylindre,
- l'angle a5 doit être positif et inférieur à 90°. Préférentiellement, il doit être de l'ordre de 30° à 40° afin de diriger les jets de combustible 40 de la nappe inférieure 36 vers le volume de comburant S1 pour utiliser le comburant de cette zone tout en limitant la remontée de ce combustible vers la nappe supérieure 38,
- le volume S1 de comburant situé entre les jets 40 de combustible de la nappe inférieure est minimisé, toujours dans le souci d'optimiser l'utilisation du comburant dans la chambre,
- la position du haut du téton 48 est la plus proche possible du nez 32 de l'injecteur 30 afin de limiter le volume de comburant sous l'injecteur qui ne sera pas impacté par les jets de combustible, ce qui revient encore une fois à minimiser le volume S1. Ainsi le rapport H/L est supérieur à 40% et préférentiellement supérieur à 60%,
- l'angle a3 est sensiblement égal ou supérieur à l'angle a1 de la nappe inférieure (-10°<a3-a1<10°). Ainsi, l'axe général des jets de la nappe inférieure tangente le flanc 54 du téton. Les jets de combustible 40 de la nappe inférieure 36 peuvent ainsi interagir avec la surface arrondie 58 en se vaporisant totalement avant d'impacter le piston,
- le volume de comburant S2 entre les deux nappes est non nul puisque l'interaction entre nappes est néfaste pour les polluants. Le volume S2 doit néanmoins être minimisé. Pour se faire, la longueur de jonction L3 entre le tore et le réentrant 66 (surface arrondie convexe de rayon R3) doit être telle que L3/(2^{∗}longueur de R2)<1 ou (L3/longueur de R2<2) afin d'assurer que le volume de comburant S2 disponible entre les nappes supérieure 38 et inférieure 36 est faible par rapport au volume de combustible généré par les jets de la nappe inférieure,
- la deuxième zone de combustion Z2 située dans la partie haute du piston qui débute à partir du réentrant 66 est destinée aux jets de combustible 42 de la nappe supérieure 38,
- le volume de combustion de la zone Z2 est au moins égal au dixième du volume total du bol,
- la zone, dite de chasse, est formée par le plan incliné 68, la surface concave 69, la surface plane 70, la surface convexe 72 et la surface plane 74. L'angle a6 est compris entre 10° et 75°, ce qui permet d'éclater les jets de combustible 42 pour créer un mouvement aérodynamique au-dessus du piston et additionnellement d'aller utiliser le comburant dans la zone de chasse. Cet aérodynamique permet un meilleur mélange combustible/comburant au-dessus du piston, notamment pendant la détente et favoriser ainsi l'oxydation des gaz brûlés,
- pour favoriser la répartition du combustible issu des jets 42 dans la chasse, une surface 68 de guidage est prévue entre le réentrant 66 et la surface 70. Cette surface de guidage peut être arrondie en prolongement du réentrant ou sensiblement plane. Cette surface de guidage sert à concentrer les jets de combustible 42 et à les guider vers la surface convexe 72. Ainsi cette surface de guidage a un angle a7 au point d'intersection P dont l'écart avec l'angle de nappe a2 est de moins de 45°,
- l'emplacement de la surface d'inflexion 69 est tel que les distances L5 et L6 sont approximativement du même ordre (0.5<L5/L6<2). Ainsi, avantageusement les jets de combustible impacteront sensiblement en même temps le piston dans respectivement le tore et la zone d'inflexion.
- le diamètre ID1 doit être tel que ID1/GD>1 et ID1<(GD+ (Cb-GD)^{∗}2/3). Ceci permet aux jets de combustible 42 d'optimiser l'aérodynamique au-dessus du piston.

De plus,
- le rapport BD/L est inférieur à 6, préférentiellement inférieur à 4,
- le rapport R2/R1 est inférieur à 1, préférentiellement inférieur à 0.6,
- le rapport FD/BD est inférieur à 1,
- le rapport Cb/BD est inférieur à 2 pour conserver une vaporisation complète du combustible et éviter le mouillage de la paroi du cylindre,
- le rapport GD/BD est compris entre 0.7 et 1 pour l'aérodynamique du tore et la remontée des jets de combustible,
- le rapport H/L est supérieur à 40%, préférentiellement supérieur à 60% pour minimiser le volume de comburant entre le nez de l'injecteur et le téton,
- le rapport L5/L6 est compris entre 0.5 et 2 pour l'impact des deux nappes au même moment,
- A1 est compris entre 40° et 130° avec a1=A1/2,
- A2 est compris entre 130° et 180° avec a2=A2/2,
- a3 est sensiblement égal à a1,
- a4 est supérieur à 80°,
- a5 est compris entre 0° et 90°, de préférence sensiblement de 30° à 40°,
- l'angle a6 est compris entre 15° et 75°,
- a7-a2 est inférieur à 45°,
- le rapport ID1/GD est supérieur à 1,
- ID1 est inférieur à (GD+(Cb-GD)^{∗}2/3).

Ainsi, grâce à ce paramétrage du bol, les jets de combustible de la nappe inférieure 36 ciblent directement le tore 64 et n'impactent pas directement le réentrant 66.

De ce fait, la combustion du mélange combustible/comburant inférieur se déroule essentiellement dans le volume du tore alors que la combustion du mélange combustible/comburant supérieur se déroule essentiellement dans la chasse et au-dessus du piston.

De plus, l'interaction des jets de la nappe supérieure avec les jets de la nappe inférieure est limitée, ce qui permet d'homogénéiser le mélange comburant/combustible tout en respectant des contraintes de tenue mécanique à forte charge.

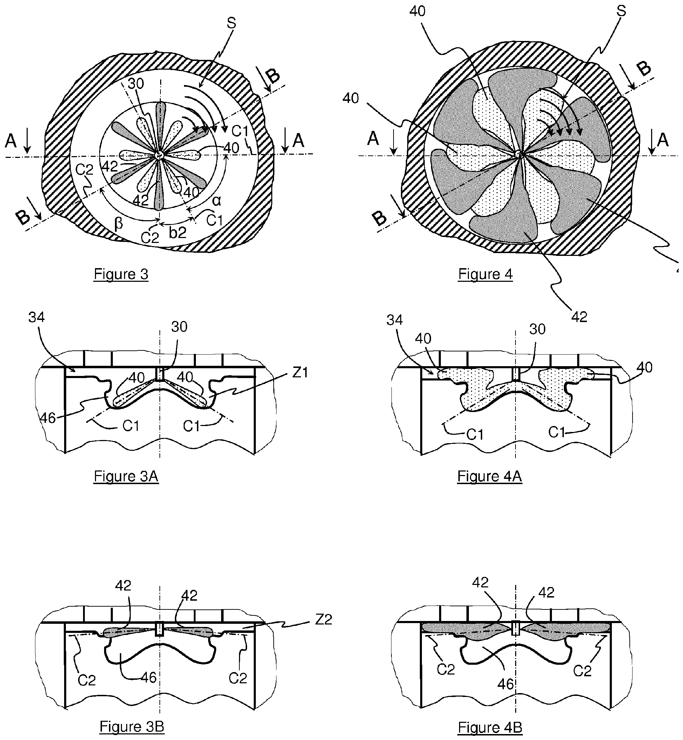

On se rapporte maintenant à la figure 3 en association avec la figure 1 qui illustrent un exemple d'injection de combustible dans la chambre de combustion 34.

Comme déjà mentionné, l'injecteur 30 porte au niveau de son nez 32 des orifices d'injection 33 à partir desquels partent radialement les jets de combustible (voir figure 1). Ces orifices se composent d'au moins deux séries d'orifices radiaux 33a et 33b d'injection de combustible placées sensiblement parallèle l'une à l'autre. Les orifices sont disposés circonférentiellement sur le nez et les séries sont placées l'une au-dessus de l'autre. L'une des séries comporte des orifices 33a au travers desquels le combustible est injecté en formant la nappe inférieure de jets 36 d'axe C1 pour la zone de mélange Z1. L'autre des séries comporte des orifices 33b pour l'injection de combustible formant la nappe supérieure 38 de jets d'axe C2 pour la zone de mélange Z2.

Dans cette configuration, l'injection radiale des jets de combustible se réalise selon une direction radiale qui part de l'injecteur en s'écartant de cet injecteur vers les parois de la chambre de combustion et qui correspond aux axes C1 et C2.

Bien entendu et cela sans sortir du cadre de l'invention, les diamètres des orifices 33a et 33b peuvent être différents. A titre d'exemple, le diamètre des orifices 33a peut être plus grand que le diamètre des orifices 33b. Comme la pression d'injection est identique dans la région du nez de l'injecteur, ceci a pour effet de réaliser deux nappes de jets de combustible avec des débits différents.

De même, le nombre d'orifices entre la nappe inférieure et la nappe supérieure peut être différent et corrélé en fonction du nombre de swirl comme il sera explicité dans la suite de la description.

Enfin, le nombre d'orifices "n" que l'on peut mettre sur l'ensemble des deux nappes peut être relié au nombre de swirl "Ns" par la corrélation : -4.Ns+16≤ n ≤-4.Ns+18.

Le cas limite d'un nombre d'orifices ou n=18 correspond à un nombre de swirl nul. En effet, l'angle formé par les jets de combustible étant généralement voisin de 20°, en l'absence de swirl, le nombre de jets doit en effet être inférieur ou égal à 18 pour éviter une interaction directe entre les jets. De plus, dans ce cas limite, l'interaction des jets de la nappe inférieure avec le fond de bol ayant pour conséquence un élargissement de la tête des jets de combustible, lors de leur remontée vers la zone de chasse, ils peuvent interagir avec les jets de la nappe supérieure et perturber le mélange.

Ceci a généralement pour effet une augmentation de la production de suies et une baisse du rendement de combustion. C'est pourquoi on pourra préférer réduire légèrement le nombre de jets à 17 ou même à 16 afin de garantir qu'aucune interaction n'est possible entre les jets.

Lorsque le swirl est non nul, des simulations réalisées par le demandeur avec un nombre identique d'orifices sur chacune des nappes, ont permis de montrer que le nombre de jets ne doit pas dépasser 14 lorsque le nombre de swirl est égal à 1, sous peine d'augmenter sensiblement la production de suies.

D'une manière générale, l'objectif étant de minimiser le rôle du mouvement de swirl dans le mélange et de réaliser ce mélange par une multiplication du nombre de jets, on préconisera de ne pas aller en deçà de 10 trous d'injection, soit 5 trous par nappe et au-delà d'un nombre de swirl de 1,5.

En se rapportant maintenant à la figure 3 qui illustre un injecteur comportant 12 orifices d'injection avec 6 orifices 33a et 6 orifices 33b, les jets 40 de la nappe 36 sont régulièrement reparties circonférentiellement en étant séparés chacun d'un angle α sensiblement égale à 60° par rapport à leur axe C1 et les jets 42 de la nappe 38 sont également régulièrement reparties circonférentielle en étant séparant chacun d'un angle β sensiblement égale à 60° par rapport à leur axe C2.

De plus, les orifices 33a de la nappe inférieure et les orifices 33b de la nappe supérieure ne doivent pas se trouver les uns au-dessus des autres, mais les axes des deux jets voisins et appartenant à des nappes différentes doivent avoir un déphasage angulaire, noté b2, qui est ici sensiblement égal au demi-angle entre deux jets d'une même nappe.

Ceci permet d'éviter l'interaction entre les deux nappes lorsque le combustible issu de la nappe inférieure sort de la zone de bol pour rejoindre la zone de chasse.

Grâce à cela, il est possible d'utiliser un nombre de trous important et égal sur chacune des nappes avec un nombre de swirl faible, idéalement inférieur à 1,5, afin de réaliser le mélange entre le combustible et le comburant de la manière la plus rapide possible et ceci majoritairement pendant le processus d'injection.

Ce mélange est alors principalement réalisé par l'entraînement du comburant gazeux par les jets de combustible, la contribution liée au mouvement tourbillonnaire de swirl restant faible et n'étant conservée que pour achever le processus de mélange par un brassage à grande échelle lors de la détente du piston.

Ainsi, pendant l'injection du combustible, le comburant est admis dans la chambre de combustion 34 selon un mouvement de swirl S avec un nombre de swirl de 1,5.

Les jets de combustible sont au nombre de 12 en étant réparties de manière égale entre les deux nappes (6 jets pour la nappe inférieure et 6 jets pour la nappe supérieure) et l'angle b2 est de 30°.

Les jets 40 de combustible de la nappe inférieure sont dirigés vers le fond du bol 46 dans la zone Z1 (figure 3A) alors que les jets 42 de la nappe supérieure sont orientés vers le haut du bol dans la zone Z2.

Pendant la phase finale d'injection, il peut être constaté que, malgré le swirl S, les jets de combustible des deux nappes ne se chevauchent pas (figure 4) et que la combustion a utilisé la quasi-totalité du comburant présent dans la zone Z1 (figure 4A) et dans la zone Z2 (figure 4B).

## Revendications

1. Procédé d'injection de combustible pour un moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46) avec au moins deux zones de mélange (Z1, Z2), lesdits moyens d'injection projetant du combustible selon au moins deux nappes (36, 38) de jets de combustible d'angles de nappe différents (A1, A2), une nappe inférieure (36) d'axe de jet C1 pour la zone (Z1) et une nappe supérieure (38) d'axe de jet C2 pour la zone (Z2), **caractérisé en ce qu'**il consiste à injecter dans la chambre de combustion les jets de combustible (40) de l'une (36) des nappes dans une direction radiale (C1) formant un angle (b2) non nul avec la direction radiale (C2) des jets (42) de combustible de l'autre des nappes, ledit angle étant sensiblement égal au demi-angle entre deux jets d'une même nappe, et à admettre le comburant dans un mouvement de swirl avec un nombre de swirl inférieur ou égal à 1,5, le nombre de swirl étant égal au rapport entre la vitesse de rotation du mouvement tourbillonnaire du comburant et celle du vilebrequin du moteur à combustion interne.

2. Procédé selon la revendication 1, **caractérisé en ce qu'**il consiste à injecter le combustible selon un nombre de jets "n" relié au nombre de swirl "Ns" par la corrélation : -4.Ns+16≤ n ≤ -4.Ns+18.

3. Procédé selon l'une des revendications précédentes, **caractérisé en ce qu'**il consiste à injecter le combustible selon au moins deux nappes de jets de combustible (36, 38) situées axialement l'une au-dessus de l'autre avec un angle de nappe (A1, A2) différent l'un de l'autre.

4. Procédé selon l'une des revendications précédentes, **caractérisé en ce qu'**il consiste à injecter le combustible avec un débit de combustible diffèrent entre les deux nappes.

5. Moteur à combustion interne à injection directe à allumage par compression comprenant au moins un cylindre (10), une culasse (12) portant des moyens d'injection de combustible (14), un piston (16) coulissant dans ce cylindre, une chambre de combustion (34) délimitée sur un côté par la face supérieure (44) du piston comportant un téton (48) s'érigeant en direction de la culasse et disposé au centre d'un bol concave (46), ledit procédé consistant à injecter le combustible selon au moins deux nappes de jets de combustible d'angle de nappe différents (A1, A2), une nappe inférieure (36) d'axe de jet C1 et une nappe supérieure (38) d'axe de jet C2, **caractérisé en ce qu'**il comprend des moyens d'injection de combustible pour injecter les jets de combustible (40) de l'une (36) des nappes dans une direction radiale (C1) formant un angle (b2) non nul avec la direction radiale (C2) des jets (42) de combustible de l'autre des nappes, ledit angle étant sensiblement égal au demi-angle entre deux jets d'une même nappe, et **en ce qu'**il comprend des moyens d'admission du comburant dans un mouvement de swirl avec un nombre de swirl inférieur ou égal à 1,5, le nombre de swirl étant égal au rapport entre la vitesse de rotation du mouvement tourbillonnaire du comburant et celle du vilebrequin du moteur à combustion interne.

## Patentansprüche

1. Kraftstoffeinspritzverfahren für eine Brennkraftmaschine mit direkter Einspritzung und Kompressionszündung, die mindestens Folgendes beinhaltet: einen Zylinder (10), einen Zylinderkopf (12), der Mittel zum Einspritzen von Kraftstoff (14) trägt, einen Kolben (16), der in diesem Zylinder gleitet, eine Brennkammer (34), die auf einer Seite durch die obere Fläche (44) des Kolbens begrenzt wird, welcher eine Kuppe (48) umfasst, die sich in Richtung des Zylinderkopfes erhebt und in der Mitte einer konkaven Mulde (46) mit mindestens zwei Mischbereichen (Z1, Z2) angeordnet ist, wobei die Einspritzmittel entlang mindestens zwei Bahnen (36, 38) von Kraftstoffstrahlen mit unterschiedlichen Bahnwinkeln (A1, A2) Kraftstoff schleudern, mit einer unteren Bahn (36) einer Strahlachse C1 für den Bereich (Z1) und einer oberen Bahn (38) einer Strahlachse C2 für den Bereich (Z2), **dadurch gekennzeichnet, dass** es darin besteht, die Kraftstoffstrahlen (40) einer (36) der Bahnen in einer radialen Richtung (C1), die einen Winkel (b2) ungleich Null mit der radialen Richtung (C2) der Kraftstoffstrahlen (42) der anderen der Bahnen bildet, in die Brennkammer einzuspritzen, wobei der Winkel im Wesentlichen gleich dem halben Winkel zwischen zwei Strahlen einer gleichen Bahn ist, und das Oxidationsmittel mit einer Swirl-Bewegung mit einer Swirl-Zahl kleiner oder gleich 1,5 einzulassen, wobei die Swirl-Zahl gleich dem Verhältnis zwischen der Drehzahl der Wirbelbewegung des Oxidationsmittels und der der Kurbelwelle der Brennkraftmaschine ist.

2. Verfahren nach Anspruch 1, **dadurch gekennzeichnet, dass** es darin besteht, den Kraftstoff mit einer Anzahl von Strahlen "n" einzuspritzen, die durch folgende Korrelation mit der Swirl-Zahl "Ns" verbunden ist: -4.Ns+16 ≤ n ≤ -4.Ns+18.

3. Verfahren nach einem der vorhergehenden Ansprüche, **dadurch gekennzeichnet, dass** es darin besteht, den Kraftstoff entlang mindestens zwei Bahnen von Kraftstoffstrahlen (36, 38), die sich axial übereinander befinden, einzuspritzen, wobei sich ein Bahnwinkel (A1, A2) von dem anderen unterscheidet.

4. Verfahren nach einem der vorhergehenden Ansprüche, **dadurch gekennzeichnet, dass** es darin besteht, den Kraftstoff mit einer zwischen den Bahnen unterschiedlichen Kraftstoffmenge einzuspritzen.

5. Eine Brennkraftmaschine mit direkter Einspritzung und Kompressionszündung, die mindestens Folgendes beinhaltet: einen Zylinder (10), einen Zylinderkopf (12), der Mittel zum Einspritzen von Kraftstoff (14) trägt, einen Kolben (16), der in diesem Zylinder gleitet, eine Brennkammer (34), die auf einer Seite durch die obere Fläche (44) des Kolbens begrenzt wird, welcher eine Kuppe (48) umfasst, die sich in Richtung des Zylinderkopfes erhebt und in der Mitte einer konkaven Mulde (46) angeordnet ist, wobei das Verfahren darin besteht, den Kraftstoff entlang mindestens zwei Bahnen von Kraftstoffstrahlen mit unterschiedlichen Bahnwinkeln (A1, A2) einzuspritzen, mit einer unteren Bahn (36) einer Strahlachse C1 und einer oberen Bahn (38) einer Strahlachse C2, **dadurch gekennzeichnet, dass** sie Kraftstoffeinspritzmittel beinhaltet, um die Kraftstoffstrahlen (40) einer (36) der Bahnen in einer radialen Richtung (C1), die einen Winkel (b2) ungleich Null mit der radialen Richtung (C2) der Kraftstoffstrahlen (42) der anderen der Bahnen bildet, einzuspritzen, wobei der Winkel im Wesentlichen gleich dem halben Winkel zwischen zwei Strahlen einer gleichen Bahn ist, und dass sie Mittel zum Einlassen des Oxidationsmittels mit einer Swirl-Bewegung mit einer Swirl-Zahl kleiner oder gleich 1,5 beinhaltet, wobei die Swirl-Zahl gleich dem Verhältnis zwischen der Drehzahl der Wirbelbewegung des Oxidationsmittels und der der Kurbelwelle der Brennkraftmaschine ist.

## Claims

1. Fuel injection method for an internal combustion engine with direct injection with compression ignition comprising at least one cylinder (10), a cylinder head (12) bearing fuel injection means (14), a piston (16) sliding in this cylinder, a combustion chamber (34) delimited on one side by the top face (44) of the piston comprising a teat (48) that is set up towards the cylinder head and disposed at the centre of a concave bowl (46) with at least two mixing zones (Z1, Z2), said injection means spraying fuel by at least two sheets (36, 38) of fuel jets of different sheet angles (A1, A2), a bottom sheet (36) of jet axis C1 for the zone (Z1) and a top sheet (38) of jet axis C2 for the zone (Z2), **characterized in that** it consists in injecting into the fuel chamber the fuel jets (40) of one (36) of the sheets in a radial direction (C1) forming a non-zero angle (b2) with the radial direction (C2) of the fuel jets (42) of the other of the sheets, said angle being substantially equal to the half-angle between two jets of one and the same sheet, and in admitting the oxidizer in a swirl motion with a swirl number less than or equal to 1.5, the swirl number being equal to the ratio between the speed of rotation of the vortex motion of the oxidizer and that of the crankshaft of the internal combustion engine.

2. Method according to Claim 1, **characterized in that** it consists in injecting the fuel by a number of jets "n" linked to the swirl number "Ns" by the correlation: -4.Ns+16≤n≤-4.Ns+18.

3. Method according to one of the preceding claims, **characterized in that** it consists in injecting the fuel by at least two sheets of fuel jets (36, 38) situated axially one above the other with a sheet angle (A1, A2) different from one another.

4. Method according to one of the preceding claims, **characterized in that** it consists in injecting the fuel with a fuel flow rate that is different between the two sheets.

5. Internal combustion engine with direct injection with compression ignition comprising at least one cylinder (10), a cylinder head (12) bearing fuel injection means (14), a piston (16) sliding in this cylinder, a combustion chamber (34) delimited on one side by the top face (44) of the piston comprising a teat (48) that is set up towards the cylinder head and disposed at the centre of a concave bowl (46), said method consisting in injecting the fuel by two sheets of fuel jets of different sheet angle (A1, A2), a bottom sheet (36) of jet axis C1 and a top sheet (38) of jet axis C2, **characterized in that** it comprises fuel injection means for injecting the fuel jets (40) of one (36) of the sheets in a radial direction (C1) forming a non-zero angle (b2) with the radial direction (C2) of the fuel jets (42) of the other of the sheets, said angle being substantially equal to the half-angle between two jets of one and the same sheet, and **in that** it comprises means for admitting oxidizer in a swirl motion with a swirl number less than or equal to 1.5, the swirl number being equal to the ratio between the speed of rotation of the vortex motion of the oxidizer and that of the crankshaft of the internal combustion engine.
